# EUROPÄISCHE PATENTSCHRIFT

(11) **EP 1 179 290 B1**
(45) Veröffentlichungstag und Bekanntmachung des Hinweises auf die Patenterteilung: **05.04.2006**
(21) Anmeldenummer: 01118158.3
(22) Anmeldetag: 26.07.2001
(51) Int. Cl.: A01D 31/00, A01C 11/00, B65G 47/244, A23N 15/00

(54) **Vorrichtung und Verfahren zum Ausrichten von Gemüse- und Salatpflanzen.**
Device and method for aligning lettuce and vegetable plants.
Dispositif et procédé pour orienter des plantes de légume et de laitue.

(30) Priorität: 26.07.2000 DE 10036403; 20.11.2000 DE 10057445
(43) Veröffentlichungstag der Anmeldung: 13.02.2002
(60) Teilanmeldung: 04017745.3
(73) Patentinhaber: Daas, Kamal, Tira Triengle 44915 (IL)
(72) Erfinder: Daas, Kamal, Tira Triengle 44915 (IL)
(74) Vertreter: Laufhütte, Dieter

(56) Entgegenhaltungen:
- EP-A- 0 457 679
- GB-A- 2 194 431
- US-A- 3 823 815

## Beschreibung

Die Erfindung betrifft eine Vorrichtung und ein Verfahren zum Ausrichten von Gemüse- bzw. Salatpflanzen.

Gemüse- bzw. Salatpflanzen, z.B. Chicorée oder Endiviensalat, müssen aus der Erde bzw. dem Feld geerntet werden und zur Weiterverarbeitung von ihren Wurzeln getrennt werden. Dazu müssen die Pflanzen einzeln aufgenommen werden und die Wurzeln abgeschnitten werden, bevor die Köpfe z.B. verpackt und zum Vertrieb vorbereitet werden. Die einzelnen Pflanzen müssen ggf. von Hand zerschnitten werden, was einen hohen Arbeitsaufwand und eine zeitraubende Verarbeitung bedeutet. Bei jedem manuellen oder maschinellen Schneidvorgang besteht zudem die Gefahr, daß Wurzelteile an dem Kopf zurückbleiben oder verwertbares Material des Kopfes mit der Wurzel abgeschnitten werden.

Eine Vorrichtung zum Ausrichten von Gemüse-und Salatpflanzen ist aus US-A-3823815 bekannt.

Aufgabe der vorliegenden Erfindung ist es, Vorrichtungen und Verfahren zur Verfügung zu stellen, die das Pflanzen und Ernten bzw. Verarbeiten der Gemüse- bzw. Salatpflanzen vereinfachen.

Die Aufgabe wird durch eine Vorrichtung mit den Merkmalen des Anspruches 1 bzw. ein Verfahren mit den Merkmalen des Anspruches 10 gelöst. Vorteilhafte Ausgestaltungen sind Gegenstand der entsprechenden Unteransprüche.

Die erfindungsgemäße Vorrichtung weist zwei Transportbänder auf, die zwischen sich die Salat- bzw. Gemüsepflanzen fortbewegen können. Dabei bewegt sich eines der Bänder mit höherer Geschwindigkeit, so daß die Pflanzen in Rotation versetzt werden. Auf diese Weise richtet sich die Pflanze senkrecht um eine Achse aus, die durch den Kopf- und den Wurzelbereich hindurchgeht. Die Pflanze neigt dazu, sich derart aufzurichten, daß die Transportbänder zwischen sich den schmalsten Bereich der Pflanze halten, d.h. den Verbindungsbereich zwischen Kopf und Wurzel. Die Transportbänder, die die Pflanze zwischen sich einklemmen, bringen die Pflanze also zusätzlich dazu, daß sich oberhalb der Transportbänder der Kopf befindet und unterhalb die Wurzel. Diese Höhenausrichtung wird durch die Rotation begünstigt. Mit der erfindungsgemäßen Vorrichtung bekommt die Salat- bzw. Gemüsepflanze eine optimale Ausrichtung in senkrechter Richtung, wobei alle von den Transportbändern beförderten Pflanzen mit dem Verbindungsbereich zwischen Kopf und Wurzel in der gleichen Höhe angeordnet sind. Auf diese Weise entsteht ein definierter Zustand, der für alle transportierten Pflanzen gleich ist, so daß eine Weiterverarbeitung sehr leicht möglich und einfach zu gestalten ist.

Um einen sicheren Transport mit Rotation zu gewährleisten, können die Bänder mit einer Rauhigkeit versehen sein. Der Abstand der Bänder läßt sich vorteilhafterweise auf das zu verarbeitende Material einstellen. Dabei können die Bänder eine gewisse Flexiblität aufweisen um eine gewisse Vorspannung gegen die Pflanzen zu erzeugen.

Einfacherweise sind die Transportbänder, die die Pflanze zwischen sich aufnehmen, als gegenläufig angetriebene Endlosbänder ausgestaltet, die derart angetrieben sind, daß die Bewegung der Transportbänder in dem Bereich, in dem sie die Pflanzen transportieren, gleichgerichtet ist.

Um eine noch leichtere und einfachere Ausrichtung in senkrechter Richtung zu erhalten, bei der sich der Verbindungsbereich zwischen Kopf und Wurzel genau zwischen den Transportbändern befindet, kann vorteilhafterweise ein Hindernis vorgesehen sein, das im Einlaufbereich zwischen den Transportbändern derart unterhalb dieser angeordnet ist, daß eine Pflanze, die transportiert wird, mit ihrer Wurzel an dem Hindernis anstößt. So entsteht eine Schräglage der Pflanze, die sich auf diese Weise zwischen die Transportbänder kippt. Sowohl die Einleitung des Rotationsprozesses als auch die vertikale Höhenausrichtung der Pflanze werden dadurch positiv gefördert.

Bei einer anderen vorteilhaften Ausgestaltung der erfindungsgemäßen Vorrichtung zum Ausrichten sind unterhalb der Transportbänder zwei parallel laufende Ausrichtbänder vorgesehen, die das Ausrichten der durch den Kopf- und den Wurzelbereich gehenden Achse der Gemüse- bzw. Salatpflanzen in im wesentlichen vertikaler Richtung unterstützen. Die Laufrichtung dieser Ausrichtbänder und die Laufrichtung der Transportbänder schließen einen Winkel zueinander ein, so daß sich der Abstand der Ausrichtbänder und der Transportbänder entlang der Transportrichtung vergrößert. Weiterhin sind die Ausrichtbänder derart angeordnet, daß sie den Wurzelbereich der Gemüse- bzw. Salatpflanze während ihrer durch die Transportbänder erzeugten Translationsbewegung von je einer Seite erfassen, um so die Wurzelbereiche der Gemüse- bzw. Salatpflanze während ihrer translatorischen Bewegung nach unten zu ziehen. Eine solche Ausgestaltung ermöglicht eine sehr sichere Ausrichtung der Gemüse- bzw. Salatpflanzen mit ihrer Achse in in etwa vertikaler Richtung.

Einfacherweise werden die Ausrichtbänder als Endlosbänder ausgestaltet, die gegenläufig derart angetrieben sind, daß ihre Bewegung in dem Bereich, in dem sie die Pflanze zwischen sich erfassen, gleichgerichtet ist.

Die zwei Ausrichtbänder können untereinander gleich schnell bewegt werden. Durch die Rotationsbewegung der Gemüse- bzw. Salatpflanzen, die durch die unterschiedliche Geschwindigkeit der Transportbänder hervorgerufen wird, entsteht dabei eine gewisse Reibung zwischen den Ausrichtbändern und den Wurzeln der Pflanzen. Diese Reibung kann vorteilhafterweise ausgenutzt werden, um die Ausrichtung zu unterstützen. Bei einer anderen Ausgestaltung werden die Ausrichtbänder jeweils mit der Geschwindigkeit des darüber liegenden Transportbandes angetrieben. Auf diese Weise unterstützen die Ausrichtbänder die Rotationsbewegung der Pflanzen, die bereits eine Ausrichtung der Pflanzen einleitet und deren Positionierung in gleicher Höhe bewirkt. Eine solche Ausgestaltung ist besonders schonend für die Pflanze und im speziellen auch dann vorteilhaft, wenn auch die Wurzel der Pflanze weiterverarbeitet werden soll.

Die erfindungsgemäße Ausrichtungsvorrichtung kann an jeder Stelle des Verarbeitungsprozesses eingesetzt werden, der eine genaue Höhenausrichtung und Raumausrichtung der Pflanzen erfordert. Besonders vorteilhaft ist jedoch im Endbereich der Transportbänder eine Schneideinrichtung vorgesehen die zur Abtrennung des Kopfes von den Wurzeln dient. Eine solche Schneideinrichtung kann z.B. eine Klinge aufweisen, die am Verbindungsbereich zwischen Kopf und Wurzel der Pflanzen eingreift. Mit Hilfe einer solchen Schneideinrichtung ist ein definierter Schnitt für alle Pflanzen an derselben Stelle möglich, da zuvor mit Hilfe der erfindungsgemäßen Ausrichtungsvorrichtung die Pflanzen alle in dieselbe Lage gebracht wurden.

Zum einfachen Abtransport der Wurzeln bzw. der Köpfe der Pflanzen können entsprechende Förderbänder vorgesehen sein, die die einzelnen Elemente aufnehmen.

Bei dem erfindungsgemäßen Verfahren zum Ausrichten von Gemüse- bzw. Salatpflanzen werden die Pflanzen um eine etwa senkrechte Achse in Rotation versetzt, um die etwa senkrechte Ausrichtung mit definierter Höhenlage zu erreichen.

Besonders wirkungsvoll läßt sich das erfindungsgemäße Verfahren einsetzen, wenn nach der im wesentlichen senkrechten Ausrichtung mit definierter Höhenlage die Köpfe der Pflanzen mit Hilfe einer Schneideinrichtung von den Wurzeln getrennt werden.

Eine Pflanzeinrichtung für Gemüse- bzw. Salatpflanzen weist ein Trägergestell für einen Pflanzaufsatz auf, der Berge und Täler umfaßt, so daß die Wurzeln der Pflanzen in den Tälern aufgenommen werden können.

Mit Hilfe einer solchen Vorrichtung können die Pflanzen in definierter Weise regelmäßig angeordnet werden.

Aus dem Berge und Täler aufweisenden Pflanzaufsatz lassen sich die Pflanzen in sehr einfacher Weise seitlich herausschieben oder nach oben herausheben, nachdem gegebenenfalls der Pflanzaufsatz von dem Trägergestell entfernt worden ist. Die Pflanzeinrichtung vereinfacht also sowohl das Pflanzen als auch das Ernten und trägt so zur Zeit- und Kostenersparnis bei.

Das Trägergestell kann dabei eine einfache Halterung sein oder ein tischartiger Gestellaufbau. Ebenso kann der Pflanzaufsatz auch ohne Trägergestell eingesetzt werden.

Der Pflanzaufsatz kann mit dem Trägergestell fest verbunden sein, wobei zum Entnehmen der Pflanzen dann ggf. die gesamte Vorrichtung bewegt werden muß. Der Pflanzaufsatz kann mit dem Trägergestell fest verbunden sein, wobei zum Entnehmen der Pflanzen dann ggf. die gesamte Vorrichtung bewegt werden muß. Vorteilhafterweise ist der Pflanzaufsatz jedoch ohne das Trägergestell einzeln entfernbar, um z.B. in einer Erntevorrichtung eingesetzt werden zu können, die maschinell die Pflanzen entlang der Täler aus der Vorrichtung herausschiebt.

Die Berge und Täler des Pflanzaufsatzes können auf verschiedene Weise und aus verschiedenen Materialien hergestellt sein. Besonders einfach ist jedoch eine Ausführungsform, bei der ein gebogenes Metall eingesetzt wird. Ein solches gebogenes Metall kann z.B. in Zickzackform oder in Wellenform geformt sein.

Eine Weiterbildung dieser Vorrichtung sieht vor, daß der Pflanzaufsatz flexibel ist. So kann vor dem Herausschieben der Pflanzen aus den Tälern oder währenddessen das Metall derart gebogen werden, daß die Täler aufgespreizt werden. Auf diese Weise ist die Entnahme noch stärker vereinfacht.

Eine Ausgestaltung einer Vorrichtung zum Entnehmen der Gemüse- bzw. Salatpflanzen aus einer Pflanzeinrichtung weist einen oder mehrere verschiebbare Kolben aus, die in entsprechende Täler der erfindungsgemäßen Pflanzeinrichtung eingreifen und derart verschieblich sind, daß sie die Pflanzen aus den Tälern herausschieben.

Dabei kann ein Kolben vorgesehen sein, um ein Tal nach dem anderen zu entleeren. Bei einer Weiterbildung sind mehrere nebeneinanderliegende Kolben vorgesehen, die gleichzeitig bewegt werden können, um mehrere Täler gleichzeitig zu entleeren. Bei Pflanzeinrichtungen mit flexilblem Pflanzaufsatz ist dabei die Lage der Kolben an die Versetzung der Täler durch eine Biegung des Aufsatzes angepaßt.

Die Vorrichtung zum Entnehmen der Gemüse- bzw. Salatpflanzen kann ebenso zum Herausschieben von Pflanzen aus einer Pflanzeinrichtung eingesetzt werden, die kein Trägergestell umfaßt.

Besonders vorteilhaft lassen sich die Vorrichtungen zu einem System kombinieren, das eine Vorrichtung zum Entnehmen von Gemüse- bzw. Salatpflanzen z.B. aus einer Pflanzeinrichtung mit einer erfindungsgemäßen Ausrichtvorrichtung kombiniert. Dabei ist die Ausrichtvorrichtung derart angeordnet, daß die Pflanzen, wenn sie mit Hilfe der obigen Ausführung der Entnahmevorrichtung aus der Pflanzeinrichtung geschoben werden, von der Ausrichtvorrichtung aufgenommen werden und zur Weiterverarbeitung ausgerichtet und abtransportiert werden.

Eine andere Ausgestaltung einer Vorrichtung zum Entnehmen von Gemüse- bzw. Salatpflanzen aus einer Pflanzeinrichtung weist eine Schraubeneinrichtung auf, die eine Anzahl von drehbar antreibbaren Schrauben trägt, die in etwa der Anzahl der in einer Reihe der Pflanzeinrichtung aufnehmbaren Pflanzen entspricht. An einer beweglichen Aufhängung ist diese Schraubeneinrichtung räumlich bewegbar gelagert. Die Schraubeneinrichtung und die Aufhängung sind derart ausgestaltet, daß die Schrauben der Schraubeneinrichtung in die Pflanzen getrieben werden können, die sich in einer Pflanzeinrichtung auf einer Halterung in der erfindungsgemäßen Vorrichtung befinden.

Mit einer solchen Entnahmevorrichtung ist auf sehr einfache Weise jeweils eine Reihe von Pflanzen aus einer Pflanzeinrichtung zu entnehmen. Die Schrauben werden in die einzelnen Pflanzen eingeschraubt und sichern so einen sicheren Transport. Mit der beweglichen Aufhängung werden die Schrauben zusammen mit den Pflanzen nach oben bewegt und so aus der Pflanzeinrichtung herausgenommen. Vorteilhafterweise wird eine Pflanzeinrichtung eingesetzt. Es können aber auch andere Pflanzeinrichtungen verwendet werden, z. B. Pflanzeinrichtungen, deren Pflanzaufsatz einzelne, vorzugsweise vierekkige Pflanzzellen aufweist.

Die Pflanzeinrichtung kann dabei wiederum flexibel gestaltet sein, um das Entnehmen weiter zu vereinfachen. Die bewegliche Aufhängung bewegt die Schrauben zusammen mit den Pflanzen zum Beispiel zu einer Abtransporteinrichtung. Eine solche Abtransporteinrichtung kann bei einer vorteilhaften Weiterbildung zum Beispiel aus Endlosaufnahmebändern bestehen, die derart gegenläufig angetrieben werden, daß sie sich in dem Bereich, in welchem sie die Pflanzen erfassen, in die gleiche Richtung bewegen. Zwischen diese Aufnahmebänder werden die Pflanzen mit Hilfe der beweglichen Aufhängung der Ausgestaltung der Entnahmevorrichtung eingeführt und durch die Bewegung der Transportbänder abtransportiert.

Bei dieser Ausgestaltung der Entnahmevorrichtung kann die Halterung für den Pflanzaufsatz einer Pflanzeinrichtung beweglich gelagert sein. Auf diese Weise kann nach Entnahme einer Reihe und Weitergabe an die Aufnahmebänder die Halterung um eine Reihe weiter verschoben werden, so daß die Schraubeneinrichtung die Schrauben in die nächste Reihe treiben kann. Ebenso kann natürlich vorgesehen sein, daß die Aufhängung derart beweglich gelagert ist, daß sie über einen Pflanzaufsatz bewegt werden kann, der sich auf der Halterung befindet.

Wird ein flexibler Pflanzaufsatz eingesetzt, kann die Halterung wiederum wie bei der ersten Ausgestaltung derart sein, daß der flexible Pflanzaufsatz unter Spannung gehalten weden kann, um die Aufnahmen für die Pflanzen zur leichteren Entnahme aufzuweiten.

Die Schrauben können z.B. von oben in die Pflanze getrieben werden. Besonders vorteilhaft ist es jedoch, wenn die Schrauben schräg in die Pflanzen eingebracht werden, um sie aus der Pflanzeinrichtung zu entnehmen. Auf diese Weise wird verhindert, daß sich die Pflanzen beim Einschrauben mitdrehen.

Um die Pflanze selbst möglichst unverletzt zu lassen, sind die Schrauben vorteilhafterweise so angeordnet, daß sie im Wurzelbereich ansetzen.

Besonders vorteilhaft läßt sich die erfindungsgemäße Ausrichtvorrichtung auch mit dieser Ausgestaltung der Entnahmevorrichtung zu einem System kombinieren, das eine Vorrichtung zum Entnehmen von Gemüse- bzw. Salatpflanzen z.B. aus einer Pflanzeinrichtung mit einer Ausrichtvorrichtung kombiniert. Dabei ist die Ausrichtvorrichtung derart angeordnet, daß die Pflanzen, wenn sie von den Aufnahmebändern transportiert werden, in den Einlaufbereich einer erfindungsgemäßen Ausrichtvorrichtung gelangen. Dort werden sie dann zur Weiterverarbeitung ausgerichtet und abtransportiert.

Die Erfindung wird anhand der anliegenden Figuren im Detail erläutert. Dabei zeigt
- Fig. 1: eine schematische Draufsicht auf eine erfindungsgemäße Ausrichtvorrichtung,
- Fig. 2: eine schematische Seitenansicht einer erfindungsgemäßen Ausrichtvorrichtung,
- Fig. 3: eine mit der erfindungsgemäßen Vorrichtung ausgerichtete Pflanze in Transportrichtung gesehen,
- Fig. 4: eine solche Pflanze kurz vor dem Abtrennvorgang der Wurzel,
- Fig. 5: eine Pflanzeinrichtung in schematischer Seitenschnittansicht,
- Fig. 6: eine Pflanzeinrichtung in schematischer Draufsicht,
- Fig. 7: eine spezielle Ausführungsform der Pflanzeinrichtung vor der Entnahme der Pflanzen,
- Fig. 8: ein erstes System zur Entnahme von Pflanzen aus der Pflanzeinrichtung und zur Übergabe an eine erste Ausführungsform einer erfindungsgemäßen Ausrichtvorrichtung, in schematischer Ansicht während des Betriebes,
- Fig. 9: ein zweites System zur Entnahme von Pflanzen aus einer Pflanzeinrichtung und zur Übergabe an eine erste Ausführungsform einer erfindungsgemäßen Ausrichtvorrichtung in schematischer Ansicht,
- Fig. 10: ein Detail des Systemes der Fig. 9, eine Entnahmevorrichtung schematisch darstellend, und
- Fig. 11: ein weiteres System zur Entnahme von Pflanzen aus einer Pflanzeinrichtung und zur Übergabe an eine weitere Ausführungsform einer erfindungsgemäßen Ausrichtvorrichtung in schematischer Ansicht.

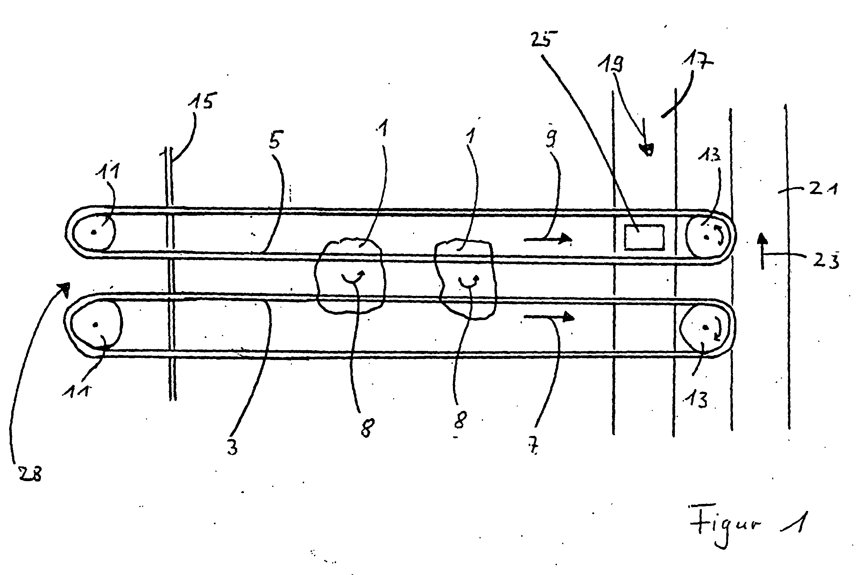

In Fig. 1 sind Endlosbänder 3 bzw. 5 gezeigt, die sich in der Richtung 7 bzw. 9 bewegen. Das Endlosband 3 wird mit einer größeren Geschwindigkeit in Rotation versetzt als das Endlosband 5, so daß sich die schematisch angedeuteten Salat- bzw. Gemüsepflanzen 1 um ihre eigene senkrechte Achse in Richtung 8 drehen. Dabei sind nur zwei Pflanzen 1 schematisch angedeutet. In Betrieb befinden sich mehrere Pflanzen nebeneinander in der Transportrichtung 7, 9 zwischen den Bändern 3, 5.

Der Abstand der Transportbänder 3, 5 ist dabei so eingestellt, daß er in etwa der Dicke des Verbindungsbereiches zwischen Kopf und Wurzel der Pflanze entspricht. Dazu sind die Transportbänder 3 und 5 zueinander verschieblich angeordnet.

Die Oberfläche der Transportbänder 3, 5 ist gegebenenfalls ausreichend rauh ausgestaltet, damit die Pflanzen 1 sicher erfaßt, transportiert und rotiert werden. Der Abstand der Bänder ist etwa auf die seitliche Ausdehnung der Pflanzen eingestellt, wobei die Bänder flexibel sind, um die Pflanzen fest zu halten.

11 und 13 deuten die Umlenkrollen für die Transportbänder 3 und 5 an, wobei entweder die Rollen 11 oder die Rollen 13 angetrieben sind.

Mit 15 ist eine Stange bezeichnet, die unterhalb der Transportbänder 3 und 5 angeordnet ist und zwar in einer Höhe, daß eine normale zu transportierende Pflanze mit ihrer Wurzel an diesem Hindernis hängenbleibt. 25 bezeichnet eine Schneideinrichtung, die im Endbereich des Transportbereiches der Bänder 3 und 5 derart angeordnet ist, daß eine Klinge direkt am Verbindungsbereich zwischen Kopf und Wurzel der Pflanze 1 entweder direkt oberhalb oder direkt unterhalb der Transportbänder angreifen kann. Die Wurzel fällt auf ein Förderband 17 und wird in Richtung 19 abtransportiert, während der Kopf auf ein Förderband 21 fällt und in Richtung 23 abtransportiert wird.

28 bezeichnet den Einlaufbereich zwischen die Transportbänder 3 und 5.

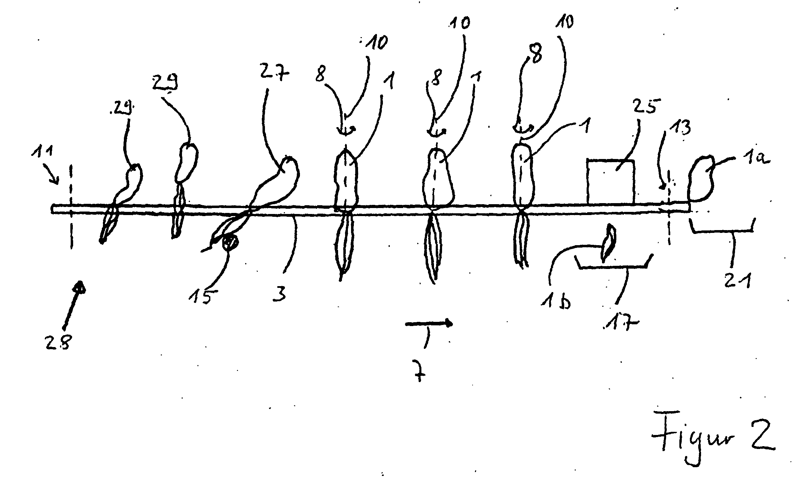

In Fig. 2 ist die gleiche Ausführungsform schematisch von der Seite gezeigt. 10 bezeichnet die Rotationsachse, um die die ausgerichteten Pflanzen 1 durch die unterschiedliche Geschwindigkeit der Transportbänder 3, 5 gedreht werden. Mit 29 sind Pflanzen gezeigt, die in zufälliger Ausrichtung zwischen die Transportbänder gelangt sind, wobei weder die Raumausrichtung noch die Höhenlage definiert sind. 27 zeigt eine Pflanze, die mit ihrer Wurzel an das Hindernis 15 anstößt und so in Schräglage versetzt wird. Weiterhin sind in Fig. 2 die Rotationsachsen der Umlenkrollen 11 und 13 sichtbar. Schließlich zeigt im Endbereich der Transportbänder die Ziffer 1 a einen abgetrennten Kopf, während er auf das Förderband 21 fällt, und 1 b die abgetrennte Wurzel, die von dem Förderband 17 abtransportiert wird.

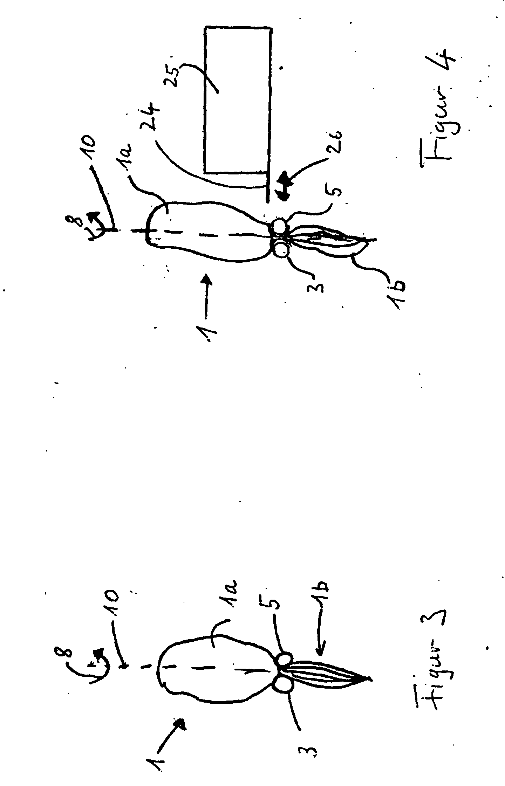

Fig. 3 zeigt eine Pflanze 1, die um ihre Achse 10 in Rotation versetzt ist, wobei die Blickrichtung entlang der Transportrichtung durch die Transportbänder 3 und 5 ist.

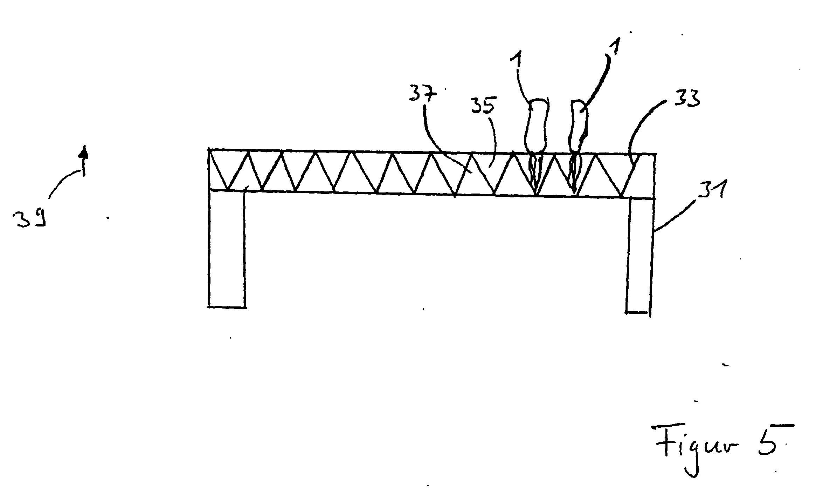

Fig. 4 zeigt dieselbe Pflanze kurz bevor der Kopf 1a von der Wurzel 1b abgetrennt wird. Die Pflanze befindet sich zwischen den Transportbändern 3 und 5 im Bereich der Schneideinrichtung 25. Diese weist eine Klinge 24 auf, die in der Richtung 26 bewegbar ist, um den Kopf 1a von der Wurzel 1 b abzutrennen. Dazu ist eine nicht gezeigte Steuerung vorgesehen, die die Schneideinrichtung in einem entsprechenden Takt bewegt. Alternativ kann z.B. eine rotierende Klinge vorgesehen sein oder mehrere Klingen, die sternförmig angeordnet sind und rotieren, um die Köpfe 1a jeweils von den Wurzeln 1 b abzutrennen.

Fig. 5 zeigt eine Schnittansicht von der Seite einer Pflanzeinrichtung. Sichtbar ist das Gestell 31, in dem sich ein zickzackförmig gebogenes Metall 33 befindet. Schematisch angedeutet ist die Lage von eingepflanzten Pflanzen 1, die mit ihren Wurzeln in die Täler 35 zwischen den Bergen 37 des gebogenen Metalls 33 reichen. In den Tälern 35 ist die Erde anzuordnen, in die die Wurzel der Pflanzen 1 ragt. Abweichend hiervon kann anstelle der Erde auch vorgesehen sein, daß der Pflanzaufsatz eine Nährlösung oder Wasser enthält oder davon durchströmt wird. Das gebogene Metall 33 läßt sich in Richtung 39 von dem Gestell 31 entfernen, so daß die Stirnseiten der Täler 35 freiliegen können.

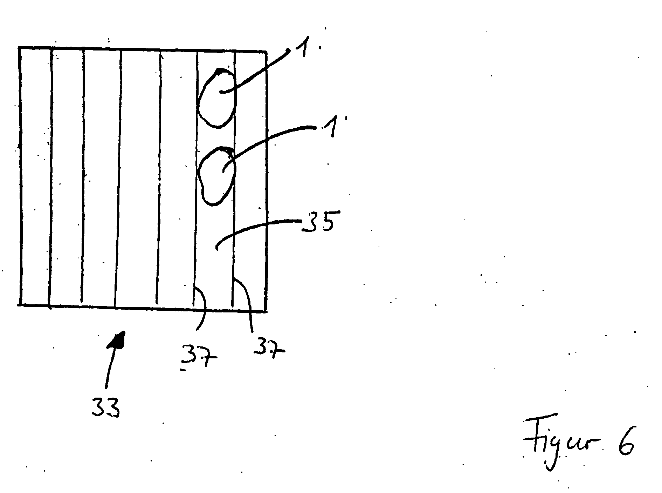

Fig. 6 zeigt eine schematische Draufsicht auf die Vorrichtung mit den angedeuteten Tälern 35, in denen sich die Pflanzen 1 befinden. Als Linien angedeutet sind die Berge 37 zwischen den Tälern 35.

Abweichend von der gezeigten Ausführungsform kann das Metall auch wellenförmig gebogen sein, ohne daß scharfe Zickzackkanten vorliegen.

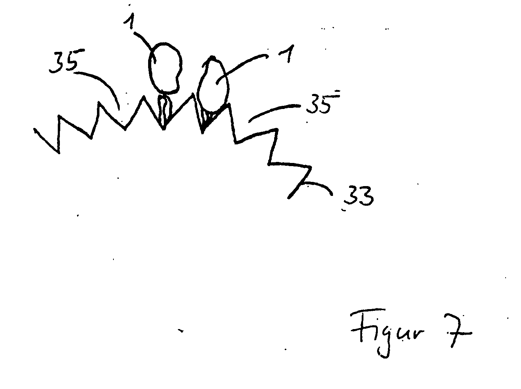

Fig. 7 zeigt ein Metall 33 vor dem Entnahmevorgang. Das Metall 33 ist biegsam ausgestaltet, so daß, wie in Fig. 7 angedeutet, eine Aufweitung der Täler 35 durch Biegen des Metalls möglich ist.

Der Übersichtlichkeit halber wurde in keiner der Figuren, im speziellen auch nicht in den Figuren 5 bis 7, Erde bzw. Dünger gezeigt, in dem die Pflanzen wachsen und der sich ggf. in den Tälern 35 befindet.

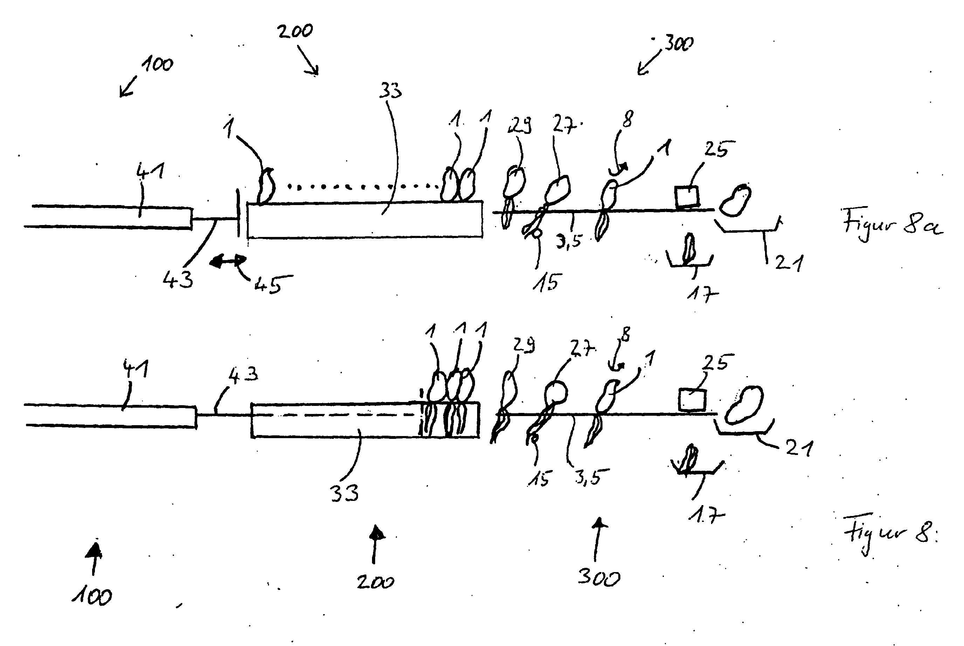

Fig. 8a zeigt den Einsatz der Ausrichtvorrichtung 300 bei der Aufnahme von Pflanzen aus einer Pflanzeinrichtung 200. Weiterhin zeigt Fig. 8a eine Schubeinrichtung 41 mit einem Kolben 43, der in Richtung 45 verschoben werden kann, um die Pflanzen 1 aus der Pflanzeinrichtung 200 zu der Ausrichtvorrichtung 300 herauszuschieben. Die Schubeinrichtung ist mit 100 bezeichnet.

Fig. 8b zeigt den Ausschiebevorgang in einem fortgeschrittenen Stadium mit ausgefahrenem Kolben 43.

Gezeigt ist eine Ausführungsform mit einem Kolben 43 zum Herausschieben einer Reihe von Pflanzen 1 aus einem Tal 35 eines Pflanzaufsatzes 33. In analoger Weise können mehrere Kolben 43 nebeneinander vorgesehen sein, um die Pflanzen einer entsprechenden Anzahl von nebeneinander befindlichen Tälern 35 in einem Pflanzaufsatz 33 gleichzeitig zu entleeren. Gegebenenfalls ist eine entsprechende Anzahl von Ausrichtvorrichtungen 300 in paralleler Anordnung vorzusehen.

Die Funktionsweise der Ausführungsformen wird im folgenden am Beispiel eines Systems aus Ausrichtvorrichtung 300, Pflanzeinrichtung 200 und Schubvorrichtung 100 erläutert.

Die Pflanzen, z.B. Chicoree- oder Endiviensalatpflanzen werden in eine Pflanzeinrichtung gesetzt, wobei ihre Ausrichtung so ist, daß die Wurzeln in die Täler 35 des Metallgestells 33 wachsen, in denen sich entsprechende Erde und/oder Dünger befinden kann.

Nachdem die Pflanzen ausgewachsen sind, entsteht der Zustand, wie er in Fig. 5 durch die zwei beispielhaft angedeuteten Pflanzen 1 gezeigt ist.

Der Pflanzaufsatz 33 wird mit ausgewachsenen Pflanzen 1 in Richtung 39 von dem Gestell 31 abgehoben.

Bei Bedarf kann das Blech 33 in der in Fig. 7 gezeigten Art gebogen werden, um ggf. vorhandene Erde in den Tälern 35 von den Bergen 37 zu lösen.

Das Metall 33 wird vor die Schubeinrichtung 100 gebracht.

Die Schubeinrichtung kann einen oder mehrere Kolben 43 umfassen, die in benachbarte Täler 35 des Pflanzaufsatzes 33 eingreifen können, um die Pflanzen 1 entlang der Täler 35 in Richtung 45 aus den Tälern 35 herauszuschieben. Der Kolben 43 wird bewegt und schiebt, wie es in Fig. 8a und Fig. 8b sichtbar ist, die Pflanzen aus den Tälern 35 des Pflanzaufsatzes 33 heraus. Die Pflanzen fallen zwischen die Transportbänder 3 und 5 der Ausrichtvorrichtung 300. Dabei haben sie eine unregelmäßige Ausrichtung, sowohl in der Höhe als auch in der Raumausrichtung, wie es die Pflanze 29 in den Figuren 8a und 8b symbolisieren soll.

Ist der Pflanzaufsatz 33 aus flexiblem Material gefertigt, so kann der Pflanzaufsatz auch in auseinandergebogenem Zustand, wie es in Fig. 7 sichtbar ist, vor eine Schubeinrichtung 100 gebracht werden, die entsprechend versetzt angeordnete Kolben 43 hat, um die Pflanzen 1 auf entsprechend angeordnete Ausrichtvorrichtungen 300 zu schieben.

Von den Transportbändern 3 und 5 werden die Pflanzen weiterbewegt, bis sie mit ihrer Wurzel 1 b an das Hindernis 15 anstoßen, wie es die Pflanze 27 in den Figuren 8a und 8b bzw. der Fig. 2 symbolisiert. Durch die höhere Geschwindigkeit des Bandes 3 mit Bezug zu dem Band 5 werden die Pflanzen in Rotation 8 versetzt. Diese Rotation durch die rauhen Bänder 3, 5 begünstigt die senkrechte Ausrichtung der Pflanzen um die Achse 10. Weiterhin wird sich die Pflanze derart bewegen, daß ihr schmalster Bereich, in der Regel der Verbindungsbereich zwischen Kopf 1 a und Wurzel 1b sich zwischen den Transportbändern 3 und 5 befindet. Auf diese Weise haben alle Pflanzen 1 nach dem Transport durch die Transportbänder 3, 5 in etwa die gleiche Ausrichtung und Raumhöhe. Am Ende der Bänder 3, 5 befindet sich die Schneideinrichtung 25, die dann in definierter Weise den Verbindungsbereich zwischen Kopf 1a und Wurzel 1b durchtrennen kann, der sich für alle Pflanzen in der gleichen Höhe befindet. Der Kopf fällt auf das Band 21 und wird in Richtung 23 abtransportiert, während die Wurzel auf das Band 17 fällt und in Richtung 19 abtransportiert wird.

Ist nur eine Schubeinrichtung 41 mit nur einem Kolben 43 vorgesehen, so wird im folgenden der Pflanzaufsatz 33 nach dem Zurückziehen des Kolbens 43 derart verschoben, daß der Kolben in das benachbarte Tal des soeben entleerten Tales 35 eingreifen kann. Nun wiederholt sich der Ausschiebe- und Ausrichtvorgang entsprechend.

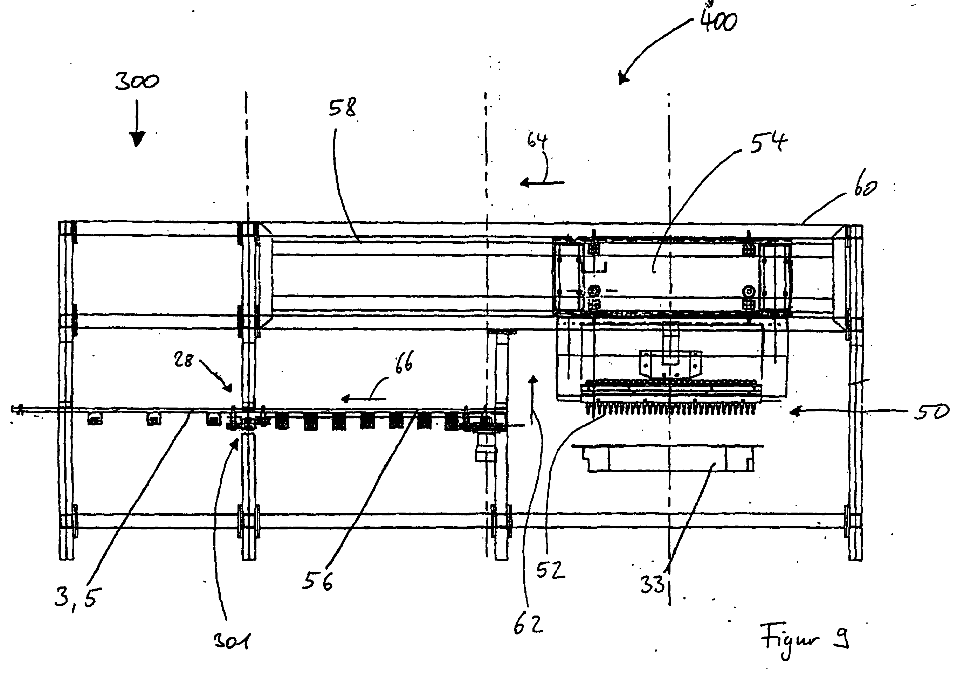

In Fig. 9 ist eine andere Ausführungsform gezeigt. Dieses System weist keine Entnahmevorrichtung mit einer Schiebeeinrichtung auf. 33 bezeichnet wiederum einen Pflanzaufsatz 50 bezeichnet eine Schraubeneinrichtung, die an einer Aufhängung 54 befestigt ist. Die Schraubeneinrichtung umfasst einzelne Schrauben 52, die, z.B. von einer nicht gezeigten Steuerung angesteuert, in Drehung versetzt werden können. Die Aufhängung 54 ist auf einer Schieneneinrichtung 58 verschiebbar gelagert. Außerdem umfasst die Aufhängung 54 einen Mechanismus, mit dessen Hilfe die Schraubeinrichtung 50 in Richtung 62 hochgezogen werden kann. Die spezielle Ausgestaltung dieser Einrichtung zum Hochziehen ist in der Fig. 9 der Übersichtlichkeit halber nicht dargestellt und kann z.B. mechanisch realisiert werden.

Die Aufhängung 54 mit der Schieneneinrichtung 58 ist in einem Gestell 60 befestigt. Die Bewegung der Schraubeinrichtung 52 in Richtung der Schieneneinrichtung 58 ist mit 62 bezeichnet. Eine translatorische Bewegung entlang der Schieneneinrichtung 58 ist mit 64 bezeichnet.

66 bezeichnet die Bewegungsrichtung von Endlos-Aufnahmebändern 56. Die Endlosaufnahmebänder 56 haben einen derartigen Abstand, daß sie die zu transportierenden Pflanzen zwischen sich aufnehmen können und sicher weitertransportieren. Sie werden in einen Übergabebereich 301 transportiert, in dem die Pflanzen in einen Einlaufbereich 28 einer erfindungsgemäßen Ausrichtvorrichtung 300 an die Transportbänder 3 bzw. 5 übergeben werden können. Die Gesamtheit der Aufhängevorrichtung 54 mit der Schraubeinrichtung 52 und den angetriebenen Aufnahmebändern 66 in dem Gestell 60 stellt die Entnahmevorrichtung 400 gemäß dieser Ausführungsform dar.

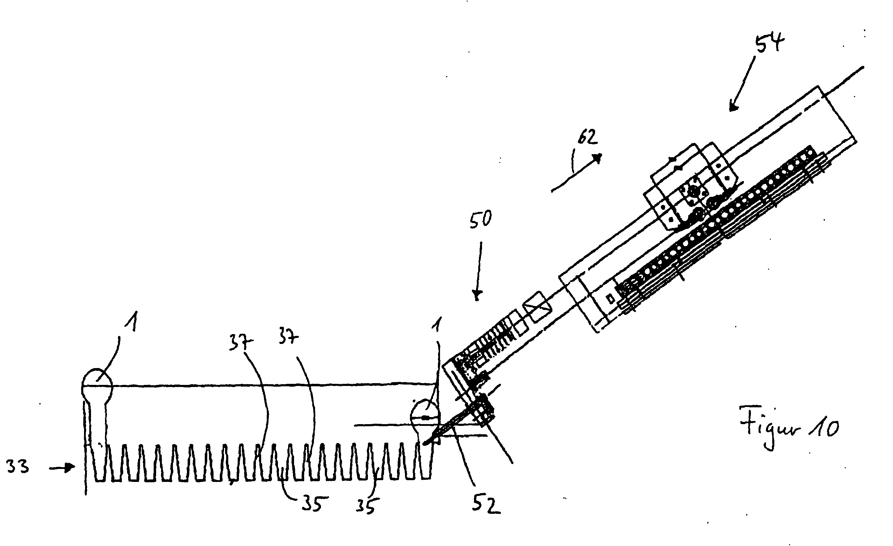

In Fig. 10 ist eine Ansicht gezeigt, in der die Schraubeinrichtung 50 in der Aufhängung 54 sichtbar ist. Deutlich erkennbar ist, daß die Anordnung der Schraubeinrichtung 50 und der Aufhängung 54 schräg ist, so daß die Schrauben 52 ebenfalls unter einem Winkel angeordnet sind. In Fig. 10 ist weiterhin ein Pflanzaufsatz 33 mit den bereits beschriebenen Tälern 35 und Bergen 37 gezeigt, in denen sich eingepflanzte Salat- bzw. Gemüsepflanzen 1 befinden. Die Lage der Schrauben 52 mit Bezug zu dem Pflanzaufsatz 33 ist derart, daß die Schrauben in der Regel den Wurzelbereich der Pflanzen 1 treffen, wenn sie seitlich schräg in die Pflanzen eingeschraubt werden.

Die Funktionsweise dieser Anordnung ist wie folgt:

Die Pflanzen werden wiederum in einer Pflanzeinrichtung gesetzt, so daß nach dem Auswachsen der Pflanzen ein Zustand entsteht, wie er in Fig. 5 angedeutet ist und bereits oben beschrieben wurde. Der Pflanzaufsatz 33 wird mit den ausgewachsenen Pflanzen 1 in Richtung 39 von dem Gestell 31 abgehoben. Wiederum kann bei Bedarf das Blech 33 der in Fig. 7 gezeigten Art gebogen werden, um ggf. vorhandene Erde in den Tälern 35 von den Bergen 37 zu lösen.

Das Metall 33 wird in die Ausgestaltung 400 der Entnahmevorrichtung gemäß der Fig. 9 eingebracht. Dazu wird es auf einer Halterung gelagert, die in Fig. 9 der Übersichtlichkeit halber nicht gezeigt ist.

Wie es in Fig. 10 erkennbar ist, werden die Schrauben 52 in eine Reihe der Pflanzen 1 eingeschraubt. Die Reihe der Schrauben ist dabei derart angeordnet, daß in der Regel jede Pflanze von einer Schraube getroffen wird.

Bei der gezeigten Ausführungsform treffen die Schrauben gleichzeitig auf eine Reihe von Pflanzen 1, die sich in einem Tal 35 befinden. Abweichend hiervon kann natürlich auch der Pflanzaufsatz 33 um 90° versetzt aufgebracht werden, so daß immer eine Pflanze 1 aus jedem Tal 35 von einer Schraube getroffen wird.

Nachdem die Schraube 52 in den Wurzelbereich der Pflanze 1 eingeschraubt wurden, wird mit Hilfe einer Steuerung ein Signal gegeben, das die Schrauben in Richtung 62 wegzieht. In Fig. 10 ist erkennbar, daß diese Bewegung schräg nach oben führt. Die Pflanzen werden auf diese Weise aus den Tälern 35 herausgezogen. Nachdem sie vollständig herausgezogen worden sind, bewegt sich die Aufhängung 54 in Richtung 64 entlang der Schieneneinrichtung 58. Dabei treten die einzelnen Pflanzen 1 zwischen die Endlosbänder 56, die für einen Transport der aufgenommenen Pflanzen in Richtung 66 sorgen.

Eine solche Entnahmevorrichtung 400 kann ebenso mit einem anders ausgestalteten Pflanzaufsatz verwendet werden, der z. B. viereckige Pflanzaufnahmen aufweist.

Sind die Pflanzen 1 einer Reihe, die sich an der Schraubeinrichtung 50 befindet, zwischen die Aufnahmebänder 56 geführt, so werden durch eine Schraubbewegung der Schrauben 52 in entgegengesetzter Richtung die Schrauben aus den Pflanzen 1 herausgedreht, so daß ein ungehinderter Transport der Pflanzen in Richtung 66 möglich ist. Es kann auch vorgesehen sein, daß die Endlos-Aufnahmebänder 56 erst in diesem Moment seitlich an die Pflanzen 1 herangebracht werden. Dazu muß eine nicht gezeigte Steuerung ein entsprechendes Signal abgeben, wenn die Aufhängung 54 vollständig oberhalb des Bereiches der Aufnahmebänder 56 angelangt ist.

Im Übergabebereich 301 verlassen die Pflanzen 1 die Aufnahmebänder 56 und treten in den Einlaufbereich 28 der erfindungsgemäßen Ausrichtvorrichtung 300 ein, die mit Bezug zu den Figuren 1 bis 4 bereits erläutert wurde.

Die weitere Funktion der Ausrichtvorrichtung entspricht der bereits beschriebenen Ausführungsform.

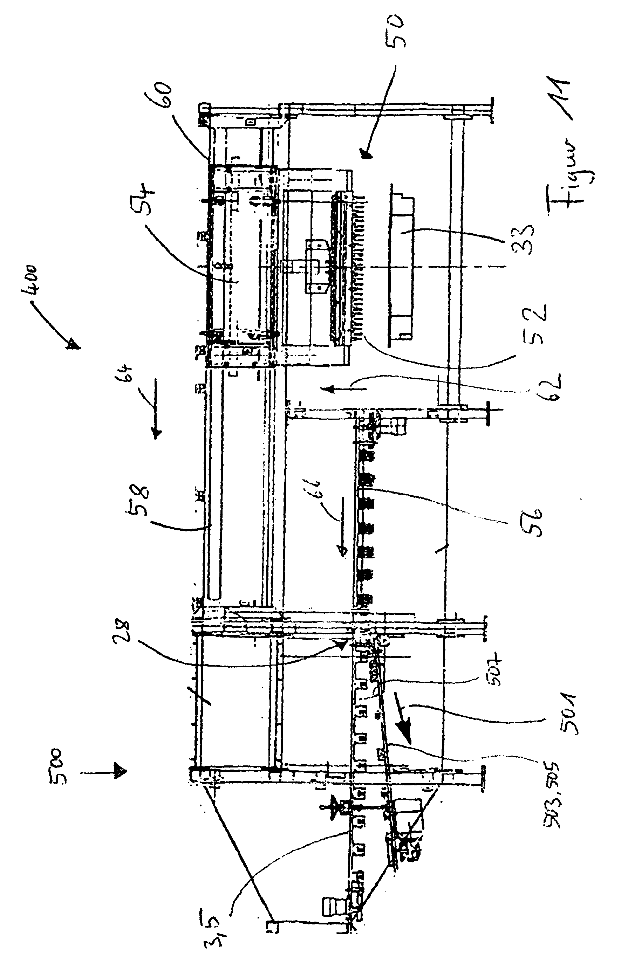

Figur 11 zeigt eine weitere Ausführungsform eines Systems mit einer weiteren Ausführungsform einer erfindungsgemäßen Ausrichtvorrichtung 500. Die Entnahmevorrichtung 400 der Figur 11 entspricht dabei der Entnahmevorrichtung 400 der Figur 9.

Während bei Figur 9 die bereits beschriebene Ausrichtvorrichtung 300 eingesetzt wird, wird bei der Ausführungsform der Figur 11 eine andere erfindungsgemäße Ausführungsform 500 der Ausrichtvorrichtung eingesetzt. Die Ausführungsform 500 umfaßt Ausrichtbänder 503, 505, die vom Einlaufbereich 28 unter einem Winkel 507 schräg nach unten führen. Die Ausrichtbänder 503, 505 sind als umlaufende Endlosbänder ausgestaltet, die sich gleichsinnig mit den darüber befindlichen Transportbändern 3, 5 bewegen. Der Winkel 507 wird dabei so gewählt, daß der maximale Abstand der Ausrichtbänder 503, 505 von den Transportbändern 3, 5 in etwa dem Ausmaß der Wurzel 1b einer zu behandelnden Gemüse- bzw. Salatpflanze 1 entspricht. Tritt nun eine Gemüse- bzw. Salatpflanze 1 in den Einlaufbereich 28 der Ausrichtvorrichtung 500 ein, so wird sie in bereits beschriebener Weise von den Transportbändern 3, 5 erfaßt und fortbewegt. Die Ausrichtbänder 503, 505 erfassen den Wurzelbereich 1b der Pflanze zwischen sich. Durch die Bewegung der Ausrichtbänder schräg nach unten wird die Ausrichtung der Gemüse- bzw. Salatpflanzen unterstützt. Die Wurzel wird entlang der Bewegung nach unten gezogen und richtet die Pflanze somit aus.

Selbstverständlich kann diese Ausführungsform 500 der Ausrichtvorrichtung auch mit anderen Ausführungsformen erfindungsgemäßer Entnahmevorrichtungen 100, 200 verwendet werden, wie sie mit Bezug zu Figur 8 erläutert sind.

Die Erfindung ermöglicht also eine einfache und sichere Ausrichtung der Pflanzen, die z.B.ein definiertes Abschneiden des Kopfes von den Wurzeln auf einfache Weise ermöglicht. Mit der erfindungsgemäßen Vorrichtung werden die Pflanzen derart ausgerichtet, daß sie immer mit demselben Bereich in derselben Höhe zwischen die Schneidvorrichtung gelangen.

Weiterhin ist mit einer Ausführungsform ein einfaches Ausschieben der ausgewachsenen Pflanzen aus der Pflanzeinrichtung möglich, die vorteilhaft mit der erfindungsgemäßen Ausrichtvorrichtung kombiniert werden kann. Mit einer anderen Ausführungsform ist ein einfaches Herausheben der ausgewachsenen Pflanzen aus der Pflanzeinrichtung in sicherer Weise möglich, die ebenfalls mit der erfindungsgemäßen Ausrichtvorrichtung kombiniert werden kann.

Insgesamt wird der Erntevorgang und der Weiterverarbeitungsvorgang durch Abschneiden der Wurzel stark vereinfacht und beschleunigt.

## Patentansprüche

1. Vorrichtung zum Ausrichten von Gemüse- bzw. Salatpflanzen (1), die einen Kopf- (1a) und einen Wurzelbereich (1b) aufweisen, mit zwei horizontal nebeneinander und parallel laufenden Transportbändern (3, 5) zum Transport der Gemüse- bzw. Salatpflanzen zwischen sich,
wobei eines der Bänder (3, 5) eine höhere Geschwindigkeit als das andere hat um während des Transportes die Pflanzen (1) in Rotation um eine im wesentlichen vertikale Achse (10) zu versetzen, die sowohl durch den Kopf- (1a) als auch durch den Wurzelbereich (1b) geht,
**dadurch gekennzeichnet,**
**dass** im Einlaufbereich (28) der Transportbänder (3, 5) unterhalb der Transportbänder ein Hindernis (15) angeordnet ist, an welches eine von den Transportbändern (3, 5) beförderte Pflanze (27) mit dem Wurzelbereich anstößt.

2. Vorrichtung nach Anspruch 1, bei der die Transportbänder (3, 5) derart angeordnet sind, dass sie die Gemüse- bzw. Salatpflanzen (1) im Übergangsbereich zwischen Kopf- (1a) und Wurzelbereich (1b) zwischen sich transportieren oder entsprechend einstellbar sind.

3. Vorrichtung nach einem der Ansprüche 1 oder 2, bei der die Transportbänder (3, 5) gegenläufig angetriebene Endlosbänder umfassen.

4. Vorrichtung nach einem der Ansprüche 1 bis 3, mit zwei zueinander parallel laufenden Ausrichtbändern (503, 505) unterhalb der Transportbänder (3, 5), wobei die Laufrichtung (501) der Ausrichtbänder (503, 505) und die Laufrichtung (7, 9) der Transportbänder (3, 5) einen Winkel (507) einschließen, so dass sich der Abstand der Ausrichtbänder (503, 505) von den Transportbändern (3, 5) entlang der Transportrichtung (7, 9) vergrößert, und die Ausrichtbänder (503, 505) derart angeordnet sind, dass sie den Wurzelbereich (1b) der Gemüse- bzw. Salatpflanzen (1) während ihrer durch die Transportbänder (3, 5) erzeugten Translationsbewegung von je einer Seite erfassen, um so die Wurzelbereiche (1 b) der Gemüse- bzw. Salatpflanzen (1) während ihrer translatorischen Bewegung nach unten zu ziehen.

5. Vorrichtung nach Anspruch 4, bei der die Ausrichtbänder (503, 505) gegenläufig angetriebene Endlosbänder umfassen.

6. Vorrichtung nach einem der Ansprüche 1 bis 5, bei der die Bewegungskomponente der Ausrichtbänder (503, 505) in Richtung der Bewegung (7, 9) der Transportbänder (3, 5) und die Bewegung (7, 9) der Transportbänder (3, 5) im wesentlichen gleich schnell sind.

7. Vorrichtung nach einem der Ansprüche 1 bis 6, mit einer Schneideinrichtung (25) im Endbereich der Transportstrecke, zum Abtrennen der Wurzeln (1b) von den Köpfen (1a) der Salat- bzw. Gemüsepflanzen (1).

8. Vorrichtung nach Anspruch 7 mit einem ersten Förderband (17) unterhalb der Schneideinrichtung (25) zum Abtransport der Wurzeln (1b).

9. Vorrichtung nach einem der Ansprüche 7 und 8, mit einem zweiten Förderband (21) im Endbereich der Transportstrecke der Transportbänder (3, 5), um die Köpfe (1 a) der Gemüse- bzw. Salatpflanzen (1) abzutransportieren.

10. Verfahren zum Ausrichten von Gemüse- bzw. Salatpflanzen mit einem Kopfbereich und einem Wurzelbereich,
wobei die Gemüse- bzw. Salatpflanzen mit Hilfe von Transportbändern (3, 5) translatorisch bewegt werden, während dieser translatorischen Bewegung in Rotation um eine im wesentlichen vertikale Achse versetzt werden und im Einlaufbereich der Transportbänder mit dem Wurzelbereich an ein Hindernis (15), das im Einlaufbereich (28) der Transportbänder (3, 5) angeordnet ist, anstoßen, so dass der Kopfbereich beim Weitertransport nach oben ausgerichtet wird und der Verbindungsbereich zwischen Kopf- (1 a) und Wurzelbereich (1 b) eine definierte Höhenlage einnimmt.

11. Verfahren nach Anspruch 10, bei dem die Gemüse- bzw. Salatpflanzen nach ihrer Ausrichtung im Verbindungsbereich zwischen Kopf- (1a) und Wurzelbereich (1 b) zerteilt werden.

12. Verfahren nach einem der Ansprüche 10 und 11, bei dem die Rotation durch verschiedene Geschwindigkeiten der Transportbänder (3, 5) hervorgerufen wird.

13. Verfahren nach einem der Ansprüche 10 bis 12, bei dem die Transportbänder (3, 5) im Übergangsbereich zwischen Kopfbereich (1a) und Wurzelbereich (1b) der Gemüse- bzw. Salatpflanzen (1) angreifen und/oder entsprechend eingestellt sind.

## Revendications

1. Dispositif pour orienter des plants de légumes ou de salades (1) qui présente une partie de tête (1a) et une partie de racine (1b), comprenant deux bandes transporteuses (3, 5) juxtaposées horizontalement et s'étendant parallèlement pour le transport des plants de légumes ou de salades entre elles,
dans lequel l'une des bandes (3, 5) a une vitesse supérieure à celle de l'autre afin de mettre les plantes (1) en rotation autour d'un axe essentiellement vertical (10) au cours du transport, cet axe passant à la fois par la partie de tête (1a) et par la partie de racine (1b),
**caractérisé en ce que**
dans la région d'entrée (28) des bandes transporteuses (3, 5), en dessous des bandes transporteuses, on dispose un obstacle (15) contre lequel une plante (27) transportée par les bandes transporteuses (3, 5) vient buter par sa partie de racine.

2. Dispositif selon la revendication 1, dans lequel les bandes transporteuses (3, 5) sont disposées de telle sorte qu'elles transportent entre elles les plants de légumes ou de salades (1) dans la zone de transition entre la partie de tête (1a) et la partie de racine (1b), ou qu'elles puissent être ajustées en conséquence.

3. Dispositif selon l'une quelconque des revendications 1 ou 2, dans lequel les bandes transporteuses (3, 5) comprennent des bandes sans fin entraînées en sens contraire.

4. Dispositif selon l'une quelconque des revendications 1 à 3, comprenant deux bandes d'orientation (503, 505) s'étendant parallèlement l'une à l'autre en dessous des bandes transporteuses (3, 5), le sens d'avance (501) des bandes d'orientation (503, 505) et le sens d'avance (7, 9) des bandes transporteuses (3, 5) formant un angle (507) de telle sorte que la distance des bandes d'orientation (503, 505) aux bandes de transport (3, 5) augmente le long du ' sens de transport (7, 9) et les bandes d'orientation (503, 505) étant disposées de telle sorte qu'elles saisissent par un côté respectif la partie de racine (1b) des plants de légumes ou de salades (1) pendant leur déplacement en translation produit par les bandes transporteuses (3, 5), afin de tirer ainsi vers le bas les parties de racine (1b) des plants de légumes ou de salades (1) pendant leur déplacement en translation.

5. Dispositif selon la revendication 4, dans lequel les bandes d'orientation (503, 505) comprennent des bandes sans fin entraînées en sens contraire.

6. Dispositif selon l'une quelconque des revendications 1 à 5, dans lequel la composante de déplacement des bandes d'orientation (503, 505) dans la direction du déplacement (7, 9) des bandes transporteuses (3, 5) et le déplacement (7, 9) des bandes transporteuses (3, 5) s'effectuent essentiellement à la même vitesse.

7. Dispositif selon l'une quelconque des revendications 1 à 6, comprenant un dispositif de coupe (25) dans la région d'extrémité de la section de transport, pour le sectionnement des racines (1b) des têtes (1a) des plants de salades ou de légumes (1).

8. Dispositif selon la revendication 7, comprenant une première bande de transport (17) en dessous du dispositif de coupe (25) pour l'évacuation des racines (1b).

9. Dispositif selon l'une quelconque des revendications 7 ou 8, comprenant une deuxième bande de transport (21) dans la région de l'extrémité de la section de transport des bandes transporteuses (3, 5) pour évacuer les têtes (1a) des plants de légumes ou de salades (1).

10. Procédé pour orienter des plants de légumes ou de salades ayant une partie de tête et une partie de racine,
dans lequel les plants de légumes ou de salades sont déplacés en translation à l'aide de bandes transporteuses (3, 5), sont mis en rotation autour d'un axe essentiellement vertical au cours de ce déplacement en translation et viennent, dans la région d'entrée des bandes transporteuses, buter avec la partie de racine contre un obstacle (15), qui est disposé dans la région d'entrée (28) des bandes transporteuses (3, 5), de sorte que la partie de tête soit orientée vers le haut au cours du transport ultérieur et que la zone de connexion entre la partie de tête (1a) et la partie de racine (1b) adopte une position en hauteur définie.

11. Procédé selon la revendication 10, dans lequel les plants de légumes ou de salades sont divisés après leur orientation dans la zone de connexion entre une partie de tête (1a) et une partie de racine (1b).

12. Procédé selon l'une quelconque des revendications 10 et 11, dans lequel la rotation est provoquée par différentes vitesses des bandes transporteuses (3, 5).

13. Procédé selon l'une quelconque des revendications 10 à 12, dans lequel les bandes transporteuses (3, 5) viennent en prise ou sont ajustées en conséquence dans la zone de transition entre la partie de tête (1a) et la partie de racine (1b) des plants de légumes ou de salades (1).

## Claims

1. Device for aligning vegetable and lettuce plants (1) which have a head area (1a) and a root area (1b), said device comprising two conveyor belts (3, 5) which run parallel and horizontally alongside one another and transport the vegetable and lettuce plants between them, one of the belts (3, 5) having a higher speed than the other one, so that, during transport, the plants (1) are driven in rotation about a substantially vertical axis (10) which passes through the head area (1a) and also through the root area (1b), **characterized in that**, in the entry area (28) of the conveyor belts (3, 5), an obstacle (15) is arranged underneath the conveyor belts, and a plant (27) being conveyed by the conveyor belts (3, 5) strikes against this obstacle (15) with the root area.

2. Device according to Claim 1, in which the conveyor belts (3, 5) are arranged in such a way that they transport the vegetable and lettuce plants (1) between them in the transition area between head area (1a) and root area (1b) or they can be adjusted accordingly.

3. Device according to either of Claims 1 and 2, in which the conveyor belts (3, 5) comprise continuous belts driven in opposite directions.

4. Device according to one of Claims 1 to 3, with two aligning belts (503, 505) running parallel to one another underneath the conveyor belts (3, 5), the running direction (501) of the aligning belts (503, 505) and the running direction (7, 9) of the conveyor belts (3, 5) enclosing an angle (507) such that the distance of the aligning belts (503, 505) from the conveyor belts (3, 5) increases along the transport direction (7, 9), and the aligning belts (503, 505) being arranged in such a way that they hold the root area (1b) of the vegetable and lettuce plants (1) in each case from one side, during their translation movement generated by the conveyor belts (3, 5), in order in this way to pull the root areas (1b) of the vegetable and lettuce plants (1) downwards during their translation movement.

5. Device according to Claim 4, in which the aligning belts (503, 505) comprises continuous belts driven in opposite directions.

6. Device according to one of Claims 1 to 5, in which the movement component of the aligning belts (503, 505) in the direction of the movement (7, 9) of the conveyor belts (3, 5) and the movement (7, 9) of the conveyor belts (3, 5) have substantially the same speed.

7. Device according to one of Claims 1 to 6, with a cutting means (25) arranged at the end area of the transporting distance and used for separating the roots (1b) from the heads (1a) of the lettuce and vegetable plants (1).

8. Device according to Claim 7, with a first belt conveyor (17) arranged underneath the cutting means (25) for the purpose of carrying away the roots (1b).

9. Device according to either of Claims 7 and 8, with a second belt conveyor (21) arranged at the end area of the transporting distance of the conveyor belts (3, 5) for the purpose of carrying away the heads (1a) of the vegetable and lettuce plants (1).

10. Method for aligning vegetable and lettuce plants which have a head area and a root area, which vegetable and lettuce plants are moved in translation with the aid of conveyor belts (3, 5), are driven in rotation about a substantially vertical axis during this translation movement, and, in the entry area of the conveyor belts, strike with their root area against an obstacle (15) arranged in the entry area (28) of the conveyor belts (3, 5), with the result that the head area is aligned upwards during the onward transport, and the connection area between head area (1a) and root area (1b) adopts a defined height position.

11. Method according to Claim 10, in which, after their alignment, the vegetable and lettuce plants are separated in the connection area between head area (1a) and root area (1b).

12. Method according to either of Claims 10 and 11, in which the rotation is brought about through different speeds of the conveyor belts (3, 5).

13. Method according to one of Claims 10 to 12, in which the conveyor belts (3, 5) engage in the transition area between head area (1a) and root area (1b) of the vegetable and lettuce plants (1) and/or are adjusted accordingly.
